# EUROPEAN PATENT APPLICATION

(11) **EP 1 796 359 A1**
(43) Date of publication of application: **13.06.2007**
(21) Application number: 05782108.4
(22) Date of filing: 12.09.2005
(51) Int. Cl.: H04M 3/00, H04M 11/00

(54) **SIP SERVER**

(30) Priority: 05.10.2004 JP 2004293125
(71) Applicant: MATSUSHITA ELECTRIC INDUSTRIAL CO., LTD., Osaka 571-8501 (JP); NextGen, Inc., Tokyo 1050002 (JP)
(72) Inventor: OKA, Yoshihiro c/o Matsushita El.Ind.Co.Ltd, Chuo-ku, Osaka-shi, Osaka 540-6319 (JP); FUJITA, Yoshikatsu c/o Matsushita El.Ind.Co.Ltd., Chuo-ku, Osaka-shi, Osaka 540-6319 (JP); ONISHI, Shinji c/o Matsushita El.Ind.Co.Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/016759
(87) International publication number: WO 2006/038435

(57) **Abstract**

There is provided a SIP server realizing a system capable of connecting a terminal in a local communication network to a carrier communication network without preparing a customer information database based on the communication company system specification or an IP call control device, thereby simplifying the system configuration and reducing the cost. The SIP server (30) controls connection between SIP terminals by the SIP extended network (10) built on the Internet network. A SIP mutual connection unit (33) containing one or more carrier identification numbers or representative numbers acquired from each carrier is provided in the extended network SIP server (30). The carrier identification number or the representative number contained in the SIP mutual connection unit (33) is used for reception from a carrier VoIP network (41) outside the SIP extended network (10) or transmission to the carrier VoIP network (41) from the SIP extended network (10), thereby performing external transmission and external reception at the SIP mutual connection unit (33). In the SIP extended network (10), an extended number is used for connection control.

## Description

### Technical Field

The present invention relates to an internal network SIP server for controlling communication between SIP terminals at the SIP internal network independently constructed on the Internet.

### Background Art

In recent years, providing of IP telephone services has started using a VoIP network (carrier communication network) constructed independently by communication providers. Users who make contracts with the communication provider can make voice calls between IP telephones within the same carrier VoIP network, and can receive incoming calls from a PSTN network using dedicated telephone numbers for IP telephones (050 telephone numbers) assigned by the communication provider (for example, refer to patent document 1). Currently, each communication provider operates a VoIP network independently.

On the other hand, so-called "network appliances" where home electric appliances such as television apparatus and video cameras are configured so as to be connectable to an IP network are also becoming commercial reality. It is expected to connect network appliances including the concept of an IP telephone to an IP network and provide specialized services for the network appliances via the IP network. In order to realize this, it can be considered that an ISP (Internet Service Provider) constructs an independent communication network on the Internet and provides independent services to the network appliances of contracted users on this independent network.
Patent Document 1: Japanese Patent Application Laid-open No.2000-022814.

### Disclosure of Invention

### Problems to be Solved by the Invention

However, if network appliances within an independent communication network are connected to a carrier VoIP network, it is necessary that network appliances other than the IP telephones have the same function as the IP telephones, and there is a problem of making implementation of the network appliances complicate.

Further, if a gateway is provided on the side of the independent communication network so as to make implementation of the network appliances simple, the same infrastructure as for the carrier VoIP network (such as customer information database and IP call control apparatus) is required on the side of the independent communication network. Furthermore, the system specifications are different for each communication provider, and therefore, in order to support a plurality of communication providers, it is necessary to prepare equipments such as a customer information database and IP call control apparatus corresponding to the number of the communication providers. Therefore, there is a problem of making the system complex and increasing costs.

It is therefore an object of the present invention which solves the above-described situation to provide a SIP server capable of connecting terminals within an independent communication network to a carrier VoIP network without preparing equipments such as a customer information database and IP call control apparatus corresponding to the system specifications of communication providers, and capable of realizing a simple system configuration and cost reduction.

### Means for Solving the Problem

Therefore, the present invention is configured, at a SIP server which controls connection between SIP terminals in an independent SIP network constructed on the Internet, to acquire one or a plurality of identification numbers for carrier or representative numbers from each carrier, and carry out connection control by using identification numbers for carrier or representative numbers for incoming calls from a carrier communication network or outgoing calls to the carrier communication network, and using identification numbers for independent network within the independent SIP network.

As a result, this SIP server is handled as a user agent with respect to the carrier communication networks. It is therefore possible to connect to each carrier communication network without preparing a customer information database and IP call control apparatus corresponding to the system specifications of communication providers. On the other hand, within the independent SIP network, connection control is carried out using the identification numbers for the independent network, and this SIP server acts as a proxy in connection with the carrier communication network. Therefore, it is not necessary to provide network appliances which are SIP terminals with the same functions as IP telephones, so that it is possible to make installation simple.

### Advantageous Effect of the Invention

According to the present invention, it is possible to provide a SIP server capable of connecting terminals within an independent communication network to a carrier communication network without preparing a customer information database and IP call control apparatus corresponding to the system specifications of communication providers, and capable of realizing a simple system configuration and cost reduction.

### Brief Description of the Drawings

FIG.1 is a configuration diagram of a whole network containing an internal network SIP server;
FIG.2 is a conceptual diagram showing the relationship of the Internet network, ISP network, SIP internal network, VoIP network and PSTN network in the network configuration shown in FIG.1;
FIG.3 is a system configuration diagram of the internal network SIP server;
FIG.4 is a conceptual diagram showing the relationship between a plurality of carriers and a SIP interconnection section;
FIG.5 is a conceptual diagram showing a correspondence relationship between IP telephone numbers and internal numbers registered in the databases of the carrier SIP server and the internal network SIP server;
FIG.6 is a conceptual diagram illustrating incoming calls from external lines/outgoing calls to external lines for the SIP internal network;
FIG.7A shows the state of identification numbers of a call source and call destination in a carrier VoIP network and a SIP internal network when there is an incoming call from an external line to the SIP internal network;
FIG.7B shows the state of identification numbers of a call source and call destination in a carrier VoIP network and a SIP internal network when there is an incoming call from an external line from the SIP internal network;
FIG.8 shows a specific example of an INVITE request when there is an incoming call from an external line to the SIP internal network;
FIG.9 shows a connection procedure corresponding to the combination of telephone number and call source in the case of an incoming call to an IP telephone within the SIP internal network;
FIG. 10 shows a connection path corresponding to the combination shown in FIG.9;
FIG.11 shows a connection procedure corresponding to the combination of telephone number and call source in the case of an outgoing call from an IP telephone within the SIP internal network;
FIG.12 is a conceptual diagram of the case of receiving an application service from an IP telephone within the SIP internal network;
FIG.13 is a conceptual diagram of the case of receiving an application service from an IP telephone outside the SIP internal network;
FIG.14 shows a procedure for connecting with an application from an IP telephone of a VoIP network during a call with an IP telephone within the SIP internal network; and
FIG. 15 is a conceptual diagram of a case of ordering products.

### Best Mode for Carrying Out the Invention

Embodiments of the present invention will be described in detail below with reference to the accompanying drawings.

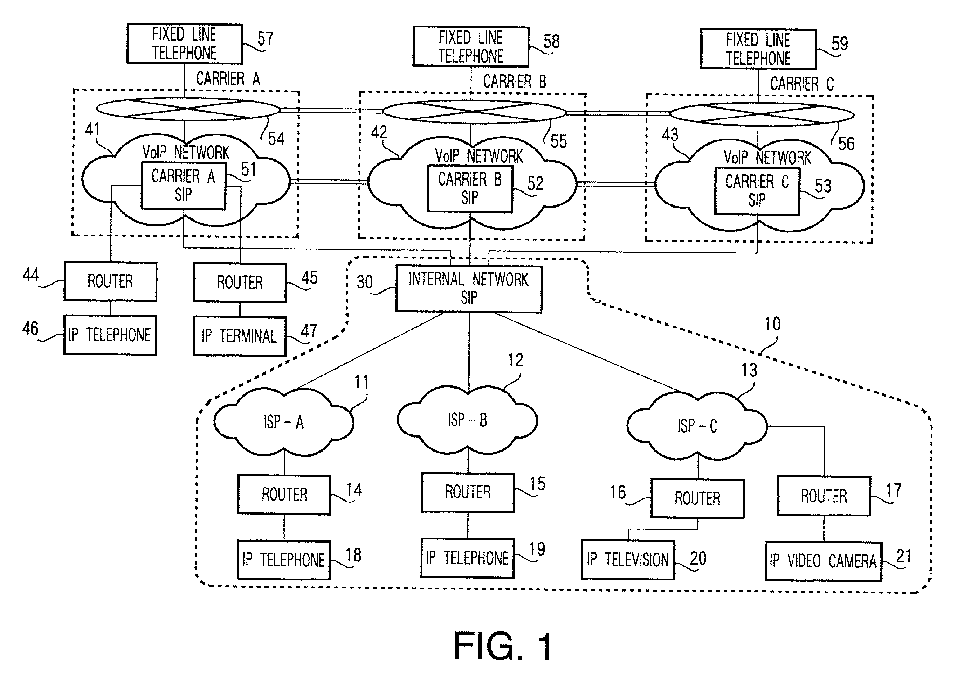

FIG.1 is a configuration diagram of a whole network containing an internal network SIP server. ISP networks 11, 12 and 13 managed by a plurality of Internet service providers ISP-A, ISP-B and ISP-C are constructed on the Internet network. IP telephones 18 and 19, IP television 20 and IP video camera 21 are connected to the ISP networks 11, 12 and 13 via routers 14, 15, 16 and 17. These terminals are terminals which are contracted to corresponding ISP-A, ISP-B and ISP-C, and IP addresses are assigned from the corresponding ISP-A, ISP-B and ISP-C. The independent SIP communication network (hereinafter referred to as "SIP internal network") is configured so as to span the plurality of ISP networks 11, 12 and 13. At SIP internal network 10, internal numbers are assigned to SIP terminals based on an independent telephone number system. The SIP terminal having a contract with the provider operating SIP internal network 10 and assigned with an internal number is a terminal within SIP internal network 10. Terminals within SIP internal network 10 register internal numbers and IP addresses in the internal network SIP server described later.

SIP internal network 10 uses SIP in connection of the SIP terminal within the internal network. In the same drawing, IP telephones 18 and 19, IP television 20, and IP video camera 21 are shown as examples of SIP terminals, but this is by no means limited to these network appliances. Connection control for the SIP terminal belonging to the SIP internal network 10 is carried out by internal network SIP server 30 on the Internet network.

On the other hand, the plurality of carriers (carrier A, B and C) on the Internet network construct VoIP networks 41, 42 and 43 which are one of the carrier communication networks. VoIP networks 41, 42 and 43 are networks whose band is managed and guaranteed by carriers. FIG. 1 shows an example of a state of connecting IP telephone 46 and other IP terminals 47 to the VoIP network 41 via routers 44 and 45.

Terminals (such as IP telephone 46) subscribed to VoIP networks 41, 42 and 43 are assigned with identification numbers for IP telephone using a 050 number system (hereinafter referred to as 050 telephone number) from each carrier of the connection destination. Subscriber terminals connect to contracting VoIP networks 41, 42 and 43 using the 050 telephone numbers. Carrier SIP servers 51, 52 and 53 are provided at VoIP networks 41, 42 and 43.

Carrier SIP servers 51, 52 and 53 control connection of subscriber terminals of the same carrier in VoIP networks 41, 42 and 43 of the own carriers, and connect to VoIP networks (41, 42 and 43) of different carriers to control connection of the subscriber terminals of different carriers. Carriers A, B and C manage PSTN networks 54, 55 and 56, and carry out connection between PSTN networks and VoIP networks. Fixed-line telephones 57, 58 and 59 of each subscriber contracted with each carrier are connected to PSTN networks 54, 55 and 56.

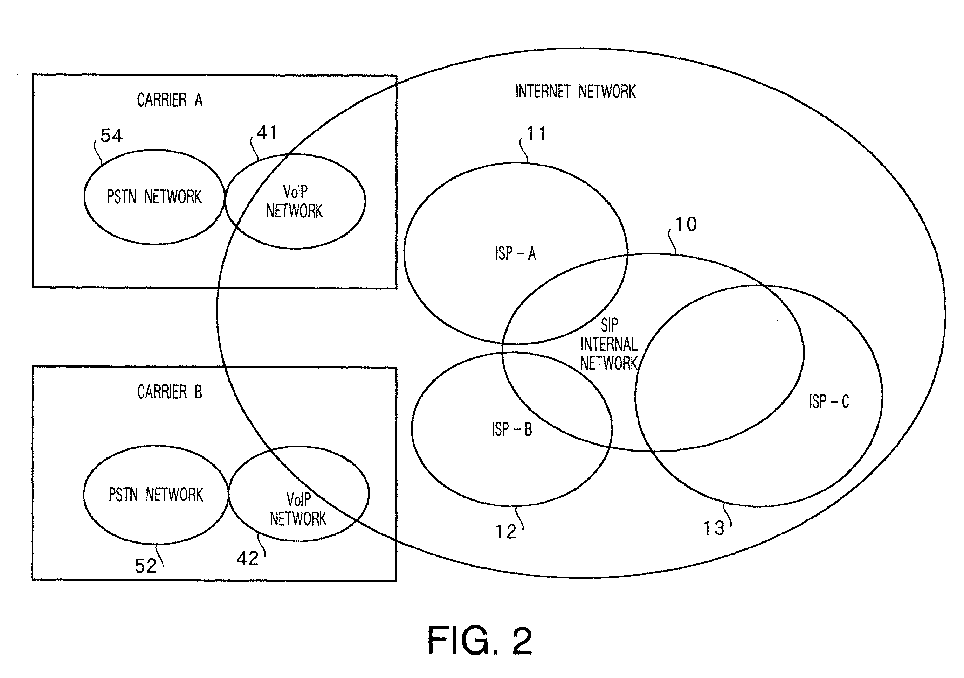

FIG.2 is a conceptual diagram showing the relationship of the Internet network, ISP network, SIP internal network, VoIP network and PSTN network in the network configuration shown in FIG.1. A plurality of ISP networks 11, 12 and 13 are constructed on the Internet network, and the SIP internal network 10 is constructed so as to span ISP networks 11, 12 and 13. Further, VoIP networks 41, 42 and (43) of carriers A, B and C are also on the Internet network, and PSTN networks 54, 55 and (56) are connected to VoIP networks 41, 42 and (43).

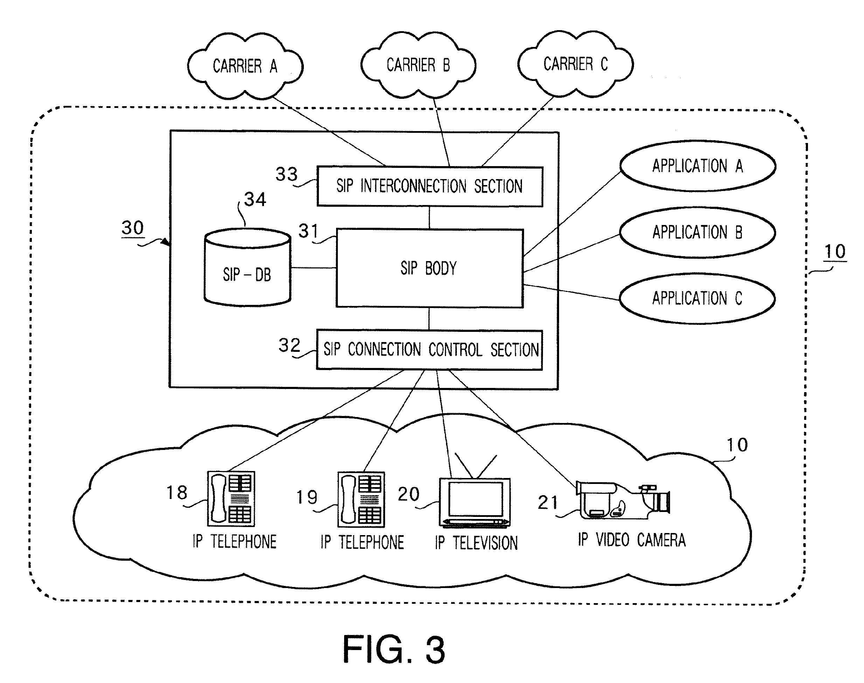

FIG.3 is a system configuration diagram of internal network SIP server 30. The main components of internal network SIP server 30 are SIP body 31, SIP connection control section 32, SIP interconnection section 33 and database 34. Internal network SIP server 30 may be constructed at the ISP or may be constructed within the carrier network management system.

SIP body 31 has a function as a connection control section of, when there is an incoming call from an external line to a 050 telephone number held in SIP interconnection section 33, connecting to a corresponding SIP terminal within SIP internal network 10 referring to database 34, and, when there is an outgoing call to an external line from the SIP terminal within SIP internal network 10 to a VoIP network of a carrier (carrier communication network), make a call to the VoIP network using the 050 telephone number assigned from the corresponding carrier referring to database 34.

SIP connection control section 32 is a portion for receiving signals (IP packets) transmitted to internal network SIP server 30 from SIP terminals within SIP internal network 10 from the Internet network, and transmitting signals (IP packets) transmitted to SIP terminals within SIP internal network 10 by internal network SIP server 30 to the Internet network. Signaling control of the SIP terminals is carried out by SIP body 31, but other connection control via the Internet network is carried out by SIP connection control section 32.

SIP interconnection section 33 holds 050 telephone numbers assigned to user agents registered in carriers A, B and C in place of the SIP terminals within SIP internal network 10. SIP interconnection section 33 connects, using 050 telephone numbers assigned to user agents registered in the carrier of the connection destination, to VoIP networks 41, 42 and 43 of the corresponding carriers. All of the SIP terminals within SIP internal network 10 can be registered in carriers A, B and C as user agents, but it is also possible to register a predetermined number of user agents in carriers A, B and C. In this case, control is carried out so as to dynamically assign 050 telephone numbers of call sources upon making calls to VoIP networks 41, 42 and 43.

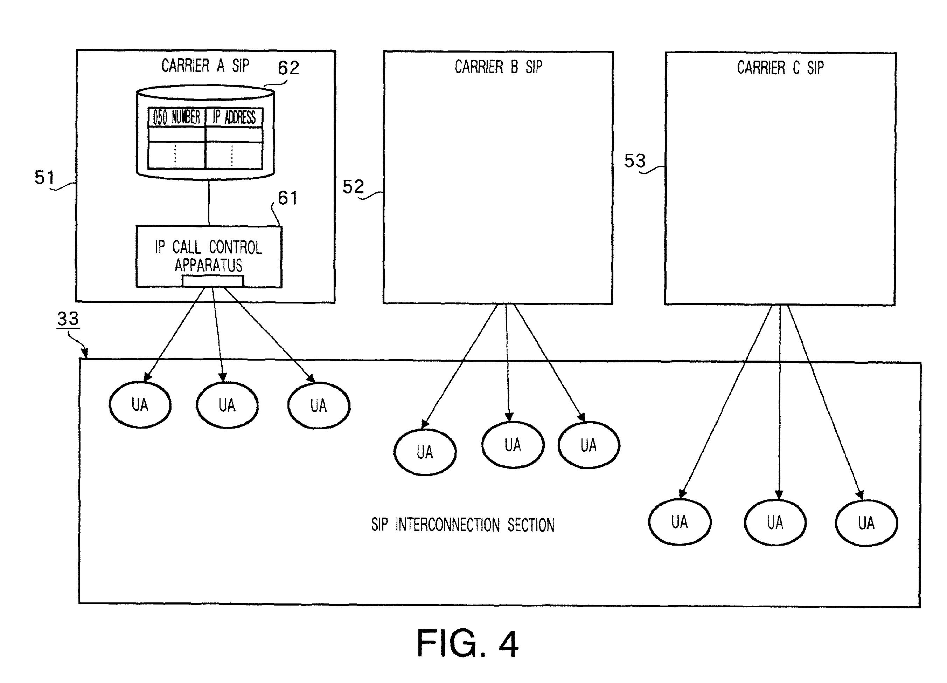

As shown in FIG.4, a plurality of user agents (UA) are respectively registered in the plurality of carriers A, B and C, and 050 telephone numbers assigned to user agents (UA) by carriers A, B and C are held in SIP interconnection section 33. Therefore, incoming calls are received at the 050 telephone numbers of the carriers held in SIP interconnection section 33 from VoIP networks 41, 42 and 43, and outgoing calls are transmitted to corresponding VoIP networks 41, 42 and 43 from the 050 telephone numbers held in SIP interconnection section 33. In addition, a 050 telephone number includes a concept of a representative number. Further, a 050 telephone number consisting of an IP telephone identification number (050) + provider identification number + subscriber number is assumed, but numbering system is by no means limited to this.

As shown in FIG.4, carrier SIP server 51 of carrier A is provided with IP call control apparatus 61 that carries out connection control (call control) based on SIP, and database 62 that registers information relating to each user agent registered in carrier A. The 050 telephone numbers which are assigned to the registered user agents and IP addresses of the registered user agents are associated with each other and held in database 62. Carrier SIP servers 52 and 53 of other carriers B and C have the same configuration. The IP address of the user agent is the IP address of SIP interconnection section 33.

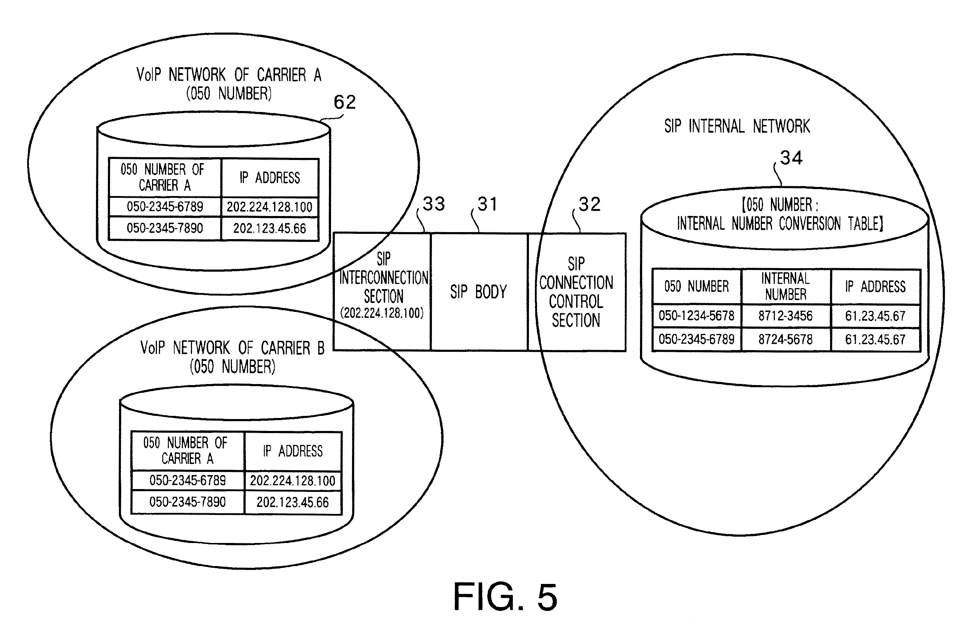

Database 34 manages connection control data containing 050 telephone numbers held in IP interconnection section 33 and internal numbers (independent network identification numbers) of SIP terminals within SIP internal network 10. Connection control data includes IP addresses assigned to the SIP terminal by the contract ISP. FIG.5 shows a correspondence relationship between the 050 telephone numbers and the internal numbers. 050 telephone numbers assigned to the subscriber terminals (UA) and their IP addresses are registered in database 62 of carrier A, and part of subscriber terminals (UA) includes user agents virtually registered by internal network SIP server 30 (050-1234-5678). The IP address of the virtual user agent is the IP address of SIP interconnection section 33. Similarly, database 62 of carrier B includes the user agent virtually registered by internal network SIP server 30 (050-2345-6789). 050 telephone numbers, internal numbers and IP addresses of user agents registered to carriers A and B are registered in database 34 of internal network SIP server 30. In the example shown in FIG.5, SIP terminals of SIP internal network 10 and user agents virtually registered to carriers correspond to each other one to one, and the 050 telephone numbers and internal telephone numbers therefore also correspond to each other one to one. However, it is not always necessary to correspond one to one, and, it is also possible to use one 050 telephone number assigned by the carrier for a plurality of SIP terminals within SIP internal network 10. In this case, a plurality of internal numbers correspond to one 050 telephone number. The 050 telephone number may be one of a plurality of 050 numbers acquired from one carrier or may be a so-called representative number assigned by the carrier. SIP body 31 also changes 050 telephone numbers of the carrier to internal numbers of SIP internal network 10 by referring to database 34.

Next, the operation of internal network SIP server 30 constructed as described above will be explained.

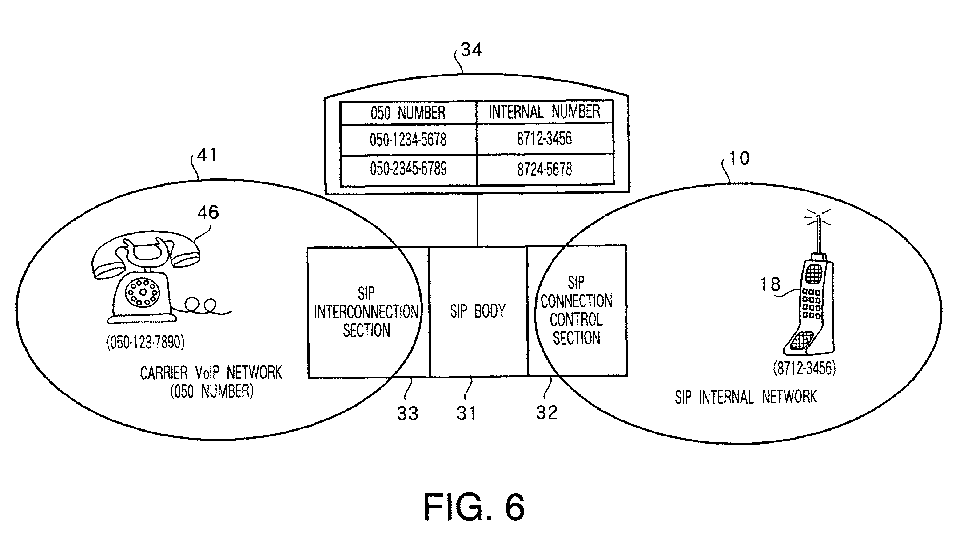

The case where there is an incoming call from an external line from VoIP network 41 of carrier A at IP telephone 18 of SIP internal network 10 and the case where an outgoing call is made to an external line from IP telephone 18 of SIP internal network 10 to VoIP network 41 of carrier A will be described with reference to the model shown in FIG.6. In order to simplify the description, it is assumed that the internal number (8712-3456) of IP telephone 18 correspond to the 050 telephone number (050-1234-5678) held in SIP interconnection section 33.

The telephone number (050-1234-5678) of carrier A is then dialed in order for IP telephone 46 which is a subscriber terminal of carrier A to call IP telephone 18 which is the call destination. The 050 telephone number of carrier A (050-1234-5678) is an IP telephone number assigned by carrier A to a user agent virtually registered in carrier A in place of IP telephone 18. When the 050 telephone number (050-1234-5678) is dialed, IP telephone 46 carries out call processing to VoIP network 41 of carrier A. Specifically, an INVITE request which takes the 050 telephone number (050-1234-5678) as a call destination is transmitted to carrier SIP server 51 of VoIP network 41.

Upon receiving an INVITE request from IP telephone 46, carrier SIP server 51 refers to database 62, and acquires the IP address of the telephone number (050-1234-5678) of the call destination. An INVITE request is then transmitted to the IP address of the call destination telephone number (050-1234-5678).

Here, an IP address registered so as to correspond to the call destination telephone number (050-1234-5678) in database 62 is an IP address of internal network SIP server 30. Therefore, the INVITE request is then transmitted to SIP interconnection section 33. Looking from carrier A, SIP interconnection section 33 holding the call destination telephone number (050-1234-5678) is the final incoming call terminal. Specifically, the incoming call arrives at the call destination telephone number (050-1234-5678) as a result of the INVITE request reaching SIP interconnection section 33 from VoIP network 41.

In internal SIP server 30, when there is an incoming call from an external line to SIP interconnection section 33, SIP body 31 changes the call destination telephone number from the 050 telephone number (050-1234-5678) to the internal number (8712-3456). In database 34, the internal number (8712-3456) of IP telephone 18 which is the original call destination is registered corresponding to the 050 telephone number (050-1234-5678) of this incoming call. The internal number (8712-3456) of the IP telephone 18 which is the original call destination is then acquired from database 34, and the call destination telephone number is rewritten with the acquired internal number (8712-3456).

In this way, an INVITE request in which the call destination telephone number is rewritten to the internal number is transmitted from internal network SIP server 30 to IP telephone 18. Specifically, an IP address of IP telephone 18 is acquired from database 34, and an IP packet of an INVITE request where the acquired IP address is rewritten is transmitted. IP telephone 18 which is the call destination receives the INVITE request via the Internet network.

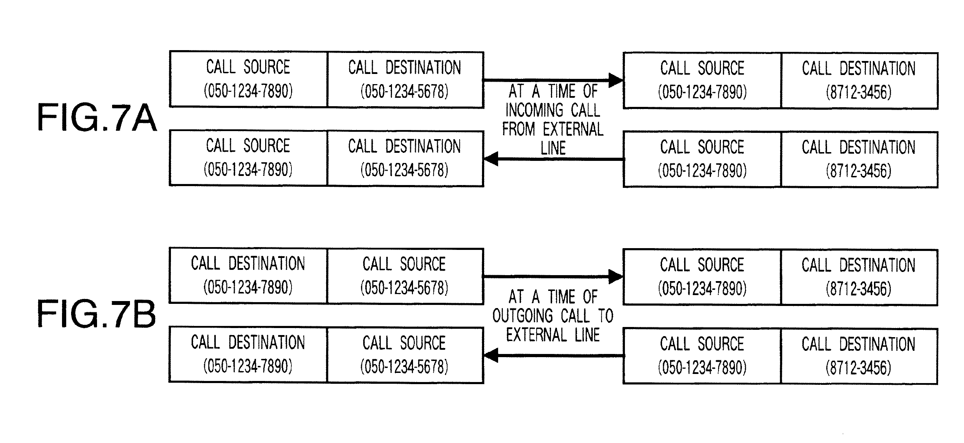

As shown in the upper part of FIG.7A, at VoIP network 41 of carrier A, the 050 telephone number (050-1234-7890) of carrier A of IP telephone 46 is set as the call source of the INVITE request, and the telephone number (050-1234-5678) of carrier A is set as the call destination. Then, at SIP internal network 10, the call destination of the INVITE request is changed from the 050 telephone number (050-1234-5678) of carrier A to the internal number (8712-3456) of SIP internal network 10.

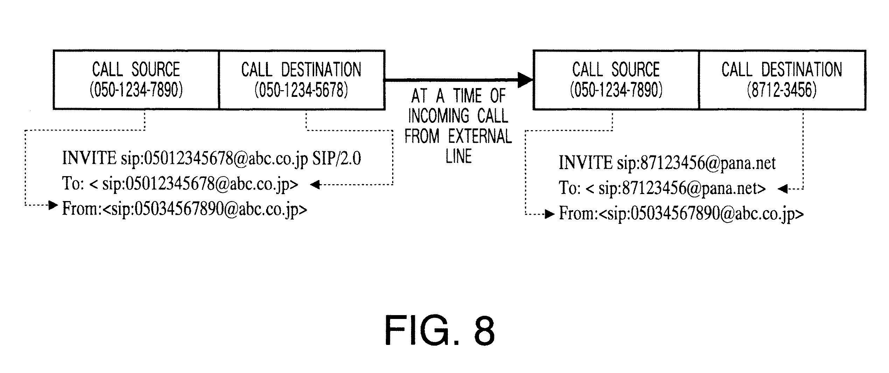

FIG.8 shows a specific example of an INVITE request corresponding to the upper part of FIG.7A passing through VoIP network 41 and SIP internal network 10. It is understood that a "to:" field of the INVITE request is rewritten from the 050 telephone number of carrier A to the internal number of SIP internal network 10 at VoIP network 41 and SIP internal network 10.

On the other hand, IP telephone 18 which is the call destination receives the INVITE request and recognizes that there is an incoming call from an external line to IP telephone 18. IP telephone 18 which recognizes the incoming call from the external line returns a response to the INVITE request. At this time, as shown in the lower part of FIG.7A, from IP telephone 18 to SIP connection control section 32 of internal network SIP server 30 is SIP internal network 10, and therefore the internal number of IP telephone 18 is used as the call destination (as viewed from the call side).

When SIP connection control section 32 receives the response from IP telephone 18 of SIP internal network 10, as shown in the lower part of FIG.7A, SIP body 31 rewrites the call destination from the internal number (8712-3456) to the 050 telephone number (050-1234-5678). In this way, the response in which the call destination is rewritten is transmitted to carrier SIP server 51 of VoIP network 41.

Carrier SIP server 51 then receives the response from internal network SIP server 30. At this time, the call destination of the response (as viewed from the call side) is rewritten to the 050 telephone number (050-1234-5678) of carrier A. At VoIP network 41, this is then recognized as the response from SIP interconnection section 33 holding the 050 telephone number (050-1234-5678). Specifically, carrier SIP server 51 of VoIP network 41 carries out normal signaling taking SIP interconnection section 33 as the call destination. It is not always necessary to be conscious of signaling with IP telephone 18 which is the SIP terminal within SIP internal network 10. This is the same even if the SIP terminal within SIP internal network 10 is a network appliance other than IP telephone 18.

Similarly hereafter, a session is established by exchanging signaling messages such as 2000K and ACK request while internal network SIP server 30 changes call destination telephone numbers at the boundary of VoIP network 41 and SIP internal network 10.

After establishment of a session, IP telephone 46 and IP telephone 18 carry out RTP voice connection to the IP addresses of each other and carry out voice communication or data communication.

Next, the case of making an outgoing call to an external line from IP telephone 18 of SIP internal network 10 to VoIP network 41 of carrier A will be described.

For example, a user who makes a call from IP telephone 18 of SIP internal network 10 to IP telephone 46 of carrier A dials the 050 telephone number (050-1234-7890) at carrier A of IP telephone 46. IP telephone 18 which receives this carries out call processing to internal network SIP server 30. As shown in the upper part of FIG.7B, an INVITE request which takes the internal number of IP telephone 18 (8712-3456) as a call source and takes the 050 telephone number (050-1234-7890) at carrier A of IP telephone 46 as a call destination is transmitted. The INVITE request is then transmitted in the form of packets to the IP address of internal network SIP server 30.

Internal network SIP server 30 analyzes the IP packets received by SIP connection control section 32 from SIP internal network 10 and recognizes that the INVITE request has been received. Upon receiving the INVITE request, SIP body 31 refers to database 34, and acquires the telephone number (050-1234-5678) of carrier A corresponding to the internal number (8712-3456) as a call source identification number which can be used by VoIP network 41 of carrier A of the call destination. In this example, the call identification number is changed to the 050 telephone number (050-1234-5678) of carrier A corresponding to the internal number (8712-3456) shown in FIG.5. SIP body 31 then generates an INVITE request in which the call source identification number is changed to the telephone number (050-1234-5678) of carrier A, and transmits the generated INVITE request from SIP interconnection section 33 to carrier SIP server 51 of carrier A.

Here, there are also cases where the internal numbers and 050 telephone numbers of the carrier of the connection destination do not have a one to one correspondence. In such cases, it is also possible to select currently available numbers from a plurality of 050 telephone numbers assigned by the carrier of the connection destination. It is also possible to utilize the identification number of the carrier to determine the connection destination carrier, since the 050 telephone number (050-1234-7890) contains the carrier identification number.

Carrier SIP server 51 of carrier A then receives an INVITE request in which the call source identification number is changed to the 050 telephone number of carrier A. Carrier SIP server 51 then recognizes the 050 telephone number (050-1234-7890) of the call destination from the INVITE request, and acquires an IP address corresponding to the call destination identification number (050-1234-7890) from database 62. Carrier SIP server 51 then transmits the INVITE request to the IP address of IP telephone 46 of the call destination. As a result, there is an incoming call to IP telephone 46.

Upon receiving a response from IP telephone 46 which receives an incoming call from an external line, carrier SIP server 51 returns a response to the call source identification number (050-1234-5678) contained in the response. The call source identification number (050-1234-5678) is the 050 telephone number held in SIP interconnection section 33, and therefore the response is transmitted to SIP interconnection section 33.

After rewriting the call source identification number (050-1234-5678) of the incoming response to the internal number (8712-3456) of SIP internal network 10 from the 050 telephone number of carrier A as shown in the lowerpart of FIG.7B, SIPbody 31 transfers the response to IP telephone 18 of the call source.

Similarly hereafter, a session is established between IP telephone 18 which is the call source and IP telephone 46 which is the call destination by exchanging signaling messages such as 2000K and ACK request while changing the call source identification number at SIP body 31. After establishing the session, voice communication or data communication is carried out between IP telephone 18 and IP telephone 46.

In this way, when a SIP terminal within SIP internal network 10 is connected with another terminal outside SIP internal network 10 via a carrier VoIP network, SIP interconnection section 33 carries out emulation to connect with the carrier VoIP network, so that SIP terminals within SIP internal network 10 can communicate in the same way as an IP telephone using the minimum necessary implementation, and it is possible to reduce implementation. Further, the terminal on the carrier communication network side can be connected without regard to that the SIP terminal within SIP internal network 10 is a network appliance. Moreover, internal network SIP server 30 is capable of connecting to each carrier communication network just by having the 050 telephone number of the virtual user agent registered in the plurality of carriers A, Band C without having an equipment such as a customer information database and IP call control apparatus for making inter-carrier communication possible in the same way as carrier SIP servers 51, 52 and 53.

Next, various ways of making incoming calls to SIP terminals within SIP internal network 10 will be described. A description will be given taking an example of IP telephone 18 in FIG.1 as a SIP terminal within SIP internal network 10, but the same is also the case for network appliances other than IP telephones.

There are cases where the 050 telephone numbers and the internal numbers of IP telephone 18 (050 numbers present) correspond to each other one to one and where there is no one to one correspondence (no 050 number), and there are also cases where a representative number corresponds to an internal number of IP telephone 18 (representative number present) and a representative number does not correspond (no representative number). Further, cases are assumed where the call source is a SIP terminal (internal telephone) within SIP internal network 10, an IP telephone (another IP telephone) which receives an incoming call from a carrier VoIP network, or a fixed line telephone (general phone) which receives an incoming call from a carrier PSTN network via a carrier VoIP network.

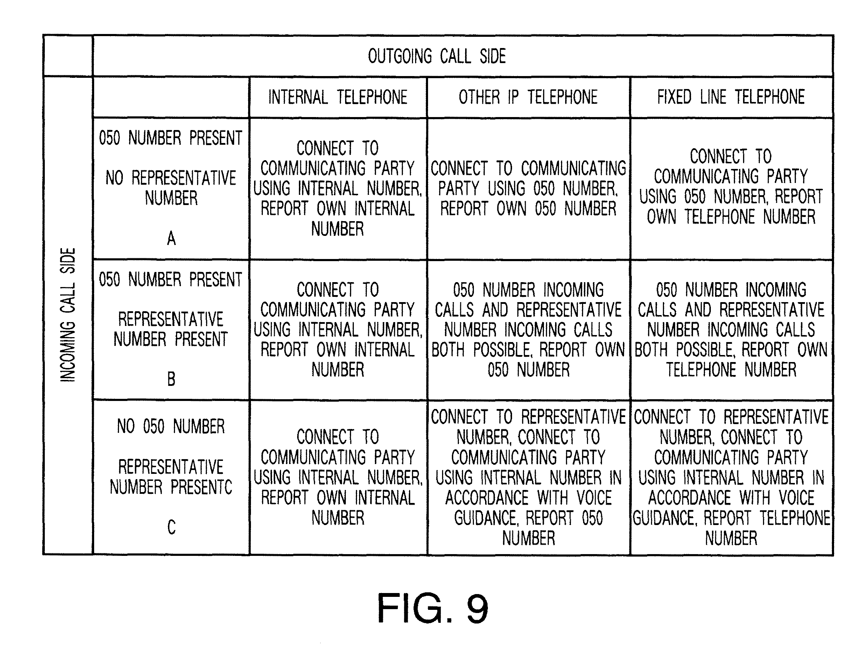

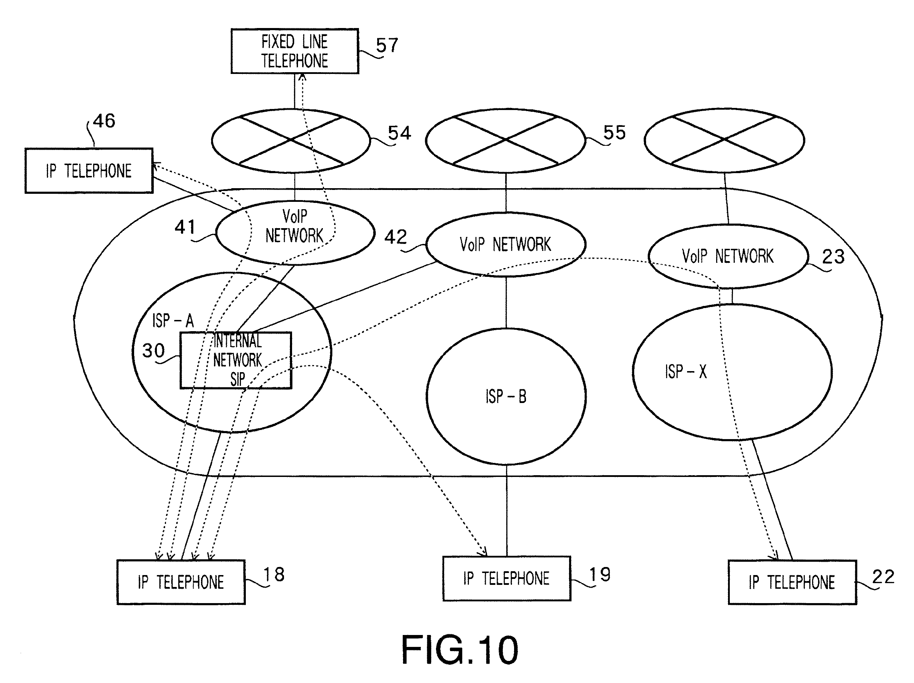

FIG.9 shows a connection example corresponding to the combination of the telephone number and call source in the case of receiving an incoming call at IP telephone 18 within SIP internal network 10.
(1) In the case of telephone number pattern A on the incoming call side
   Call source: IP telephone 19 within SIP internal network 10
   When the internal number of IP telephone 18 is dialed, IP telephone 19 connects to IP telephone 18 via internal network SIP server 30, and reports the internal number of IP telephone 19 to IP telephone 18 (path (#1) of FIG.10) . Path (#1) is closed within SIP internal network 10 and a fee is therefore not incurred.
   Call source: IP telephone 46 of the same carrier A
   When the IP telephone number of IP telephone 18 is dialed, IP telephone 46 connects to IP telephone 18 via VoIP network 41 of the same carrier A and internal network SIP server 30 (path (#2) of FIG. 10), and reports the 050 telephone number of IP telephone 46 to IP telephone 18 via internal network SIP server 30. Here, the same carrier is a carrier to which SIP interconnection section 33 has registered a virtual user agent. The 050 telephone number assigned to the user agent by this carrier is then held in SIP interconnection section 33.
   Call source: IP telephone 22 of other carrier X
   When the IP telephone number of IP telephone 18 is dialed, IP telephone 22 connects to IP telephone 18 via VoIP network 23 of carrier X, VoIP network 42 of the same carrier, and internal network SIP server 30 (path (#3) of FIG.10). SIP interconnection section 33 virtually registers the user agent at carrier B and is assigned the 050 telephone number of carrier B. Looking from SIP interconnection section 33, VoIP network 42 of carrier B is the same carrier. However, SIP interconnection section 33 has not registered a virtual user agent to carrier X. Because of this, atpath (#3), a fee is incurred to IP telephone 22 at VoIP network 42 of carrier B.
   Call source: fixed line telephone 57 of PSTN network 54
   When the 050 telephone number of IP telephone 18 is dialed, fixed line telephone 57 connects to VoIP network 41 of the same carrier via PSTN network 54, and then connects to IP telephone 18 via internal network SIP server 30 (path (#4) of FIG.10). In this case, a fee is incurred at PSTN 54.
(2) In the case of telephone number pattern B on the incoming call side
   Call source: IP telephone 19 within SIP internal network 10
   When the internal number of IP telephone 18 is dialed, IP telephone 19 connects to IP telephone 18 via internal network SIP server 30, and reports the internal number of IPtelephone 19 to IP telephone 18 (path (#1) of FIG. 10).
   Call source: IP telephone 46 of the same carrier A
   When the 050 telephone number or the representative number of IP telephone 18 is dialed, IP telephone 46 connects to IP telephone 18 via VoIP 41 of the same carrier A and internal network SIP server 30 (path (#2) of FIG.10) . The 050 telephone number is reported to the call destination as a call source identification number.
   Call source: IP telephone 22 of other carrier X
   When the IP telephone number or the representative number of IP telephone 18 is dialed, IP telephone 22 connects to IP telephone 18 via VoIP network 23 of carrier X, VoIP network 42 of the same carrier, and internal network SIP server 30 (path (#3) of FIG.10). At this time, a fee is incurred at VoIP network 42 of carrier B.
   Call source: Fixed line telephone 57 of PSTN network 54
   When the IP telephone number or the representative number of IP telephone 18 is dialed, fixed line telephone 57 performs call processing to PSTN network 54, connects to VoIP network 41 of the same carrier A from PSTN network 54, and connects to IP telephone 18 via internal network SIP server 30 (path (#4) of FIG.10). In this case, a fee is incurred at PSTN 54.
(3) In the case of telephone number pattern C on the incoming call side
   Call source: IP telephone 19 within SIP internal network 10
   When the internal number of IP telephone 18 is dialed, IP telephone 19 connects to IP telephone 18 via internal network SIP server 30, and reports the internal number of IP telephone 19 to IP telephone 18 (path (#1) of FIG. 10).
   Call source: IP telephone 46 of the same carrier A
   When the representative number of IP telephone 18 is dialed, IP telephone 46 performs call processing to VoIP network 41 of carrier A, and VoIP network 41 subjected to this processing performs call processing to internal network SIP server 30. When there is an incoming call to a representative number, internal network SIP server 30 requests input of the internal number using a voice guidance. When the internal number is inputted in accordance with the voice guidance from IP telephone 46, internal network SIP server 30 connects to IP telephone 18 corresponding to the internal number (path (#2) of FIG.10).
   Call source: IP telephone 22 of other carrier X
   When the representative number of IP telephone 18 is dialed, IP telephone 22 performs call processing to VoIP network 23 of carrier C, and VoIP network 23 performs call processing to VoIP network 42 of carrier B. VoIP network 42 subjected to this processing performs call processing using the representative number to internal network SIP server 30. When there is an incoming call to a representative number, internal network SIP server 30 requests input of the internal number using a voice guidance. When the internal number is inputted in accordance with the voice guidance from IP telephone 22, internal network SIP server 30 connects to IP telephone 18 corresponding to the internal number (path (#3) of FIG.10). At this time, a fee is incurred at VoIP network 42 of carrier B.
   Call source: Fixed line telephone 57 of PSTN network 54
   When the representative number of IP telephone 18 is dialed, fixed line telephone 57 performs call processing to PSTN network 54, and PSTN network 54 subjected to this processing connects to VoIP network 41 of carrier A. VoIP network 41 of carrier A then performs call processing to internal network SIP server 30 holding the representative number. When there is an incoming call to a representative number, internal network SIP server 30 requests input of the internal number using a voice guidance. When the internal number is inputted in accordance with the voice guidance from fixed line telephone 57, internal network SIP server 30 connects to IP telephone 18 corresponding to the internal number (path (#4) of FIG.10). In this case, a fee is incurred at PSTN 54.

Next, various ways of SIP terminals within SIP internal network 10 making outgoing calls will be described. A description will be given taking an example of IP telephone 18 of FIG.1 as a SIP terminal within SIP internal network 10.

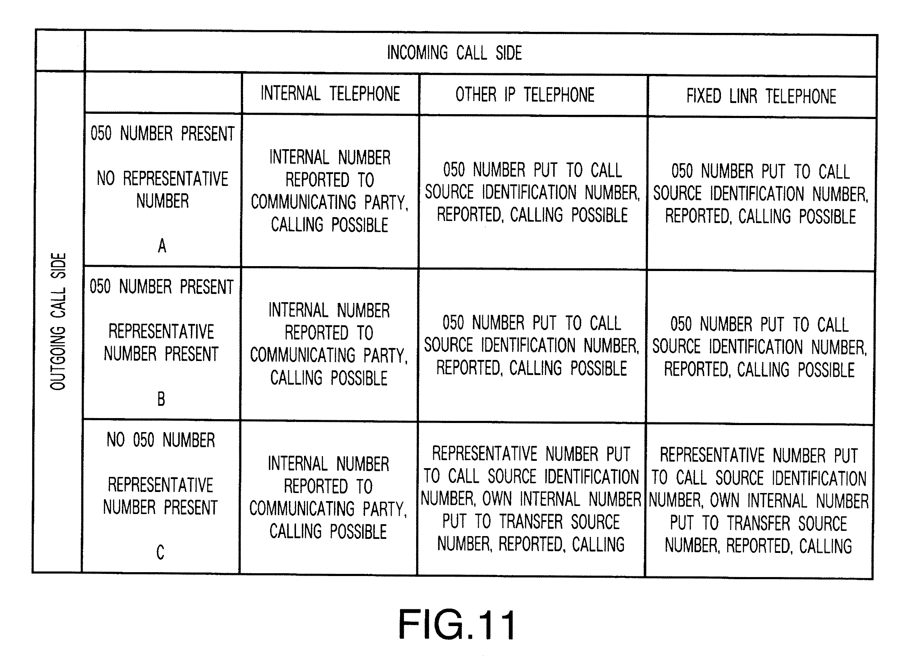

FIG.11 shows a connection example corresponding to the combination of telephone number and call destination when an outgoing call is made by IP telephone 18 within SIP internal network 10.
(1) In the case of telephone number pattern A on the outgoing call side
   Call destination: IP telephone 19 within SIP internal network 10
   When the internal number of IP telephone 19 is dialed, IP telephone 18 carries out call processing to internal network SIP server 30. Internal network SIP server 30 then makes a connection from SIP connection control section 32 to IP telephone 19, and reports the internal number of IP telephone 18 to IP telephone 19 (path (#1) of FIG.10). In this case, no fee is incurred because communication is within SIP internal network 10.
   Call destination: IP telephone 46 of the same carrier A
   When the 050 telephone number of IP telephone 46 is dialed, IP telephone 18 carries out call processing to internal network SIP server 30. Internal network SIP server 30 carries out call processing using the 050 telephone number of carrier A to VoIP network 41 of the same carrier A. Carrier SIP server 51 of VoIP network 41 carries out call processing to IP telephone 46 having the 050 telephone number to which a call request is made. As a result, IP telephone 18 connects to IP telephone 46 via internal network SIP server 30 and VoIP network 41 (path (#2) of FIG.10). The 050 telephone number of IP telephone 18 is put in the call source identification number and reported to the call destination. VoIP network 41 is the same carrier as viewed from internal network SIP server 30, and therefore no fee is incurred.
   Call destination: IP telephone 22 of other carrier X
   When the 050 telephone number of IP telephone 22 is dialed, IP telephone 18 carries out call processing to internal network SIP server 30. Internal network SIP server 30 then carries out call processing to VoIP network 42 of the same carrier taking the 050 telephone number of the same carrier B as the call source telephone number. The call destination telephone number is a 050 telephone number of carrier X. Since the call destination telephone number is a 050 telephone number for carrier X, carrier SIP server 52 of carrier B carries out call processing to VoIP network 23 of carrier X. VoIP network 23 of carrier X is subjected to this call processing and connects to IP telephone 22 via VoIP network 23 (path (#3) of FIG. 10). At this time, a fee is incurred at VoIP network 23 of carrier X.
   Call destination: Fixed line telephone 57 of PSTN network 54
   When the telephone number of fixed line telephone 57 is dialed, IP telephone 18 carries out call processing to internal network SIP server 30. Internal network SIP server 30 then recognizes that the call destination telephone number is a PSTN network telephone number of carrier A and carries out call processing to VoIP network 41 of carrier A. At this time, the call source identification number is changed to a 050 telephone number of carrier A. VoIP network 41 of carrier A then connects to PSTN network 54 based on the call destination telephone number and makes a call to fixed line telephone 57 from PSTN network 54 (path (#4) of FIG.10). In this case, a fee is incurred at PSTN 54.
(2) In the case of telephone number pattern B on the outgoing call side
   Call destination: IP telephone 19 within SIP internal network 10
   When the internal number of IP telephone 19 is dialed, IP telephone 18 carries out call processing to internal network SIP server 30 and reports the internal number of IP telephone 18. Internal network SIP server 30 connects to IP telephone 19 of the call destination identification number from SIP connection control section 32, and reports the internal number (path (#1) of FIG.10). In this case, no fee is incurred because communication is within SIP internal network 10.
   Call destination: IP telephone 46 of the same carrier A
   When the 050 telephone number of IP telephone 46 is dialed, IP telephone 18 carries out call processing to internal network SIP server 30, puts the 050 number to the call source number, and reports it to the communicating party. Internal network SIP server 30 then carries out call processing to VoIP network 41 of carrier A using the call destination identification number, and VoIP network 41 connects to IP telephone 46 (path (#2) of FIG.10). In this case, VoIP network 41 of carrier A is the same carrier, and a fee is therefore not incurred.
   Call destination: IP telephone 22 of other carrier X
   When the 050 telephone number of IP telephone 22 is dialed, IP telephone 18 carries out call processing to internal network SIP server 30, puts the 050 number to the call source number, and reports it to the communicating party. The call destination identification number is a 050 telephone number of carrier X, but internal network SIP server 30 does not hold a 050 telephone number for directly connecting to VoIP network 23 of carrier X. Consequently, internal network SIP server 30 carries out call processing to VoIP network 42 of the same carrier B. The call destination identification number is a 050 telephone number of carrier X, and therefore VoIP network 42 of carrier B carries out call processing to VoIP network 23 of carrier X using inter-carrier communication, and connects to IP telephone 22 from VoIP network 23 of carrier X (path (#3) of FIG. 10). At this time, a fee is incurred at VoIP network 23 of carrier X. In FIG.11, an example is shown of the case of using a 050 telephone number, but a call can be made to the call source number using a representative number. In this case, IP telephone 18 puts the representative number at the call source number, and puts the internal number of IP telephone 18 to the transfer source number.
   Call destination: Fixed line telephone 57 of PSTN network 54
   When the telephone number of fixed line telephone 57 is dialed, IP telephone 18 carries out call processing to internal network SIP server 30, puts the 050 number to the call source number, and reports it to the communicating party. Internal network SIP server 30 then recognizes that the call destination identification number is a telephone number of PSTN network 54 of carrier A, and therefore carries out call processing to VoIP network 41 of carrier A. The call destination identification number is a telephone number of PSTN network 54 of carrier A, and therefore VoIP network 41 connects to PSTN network 54, and makes a call from PSTN network 54 to fixed line telephone 57 (path (#4) of FIG. 10). In this case, a fee is incurred at PSTN 54. In FIG.11, a case has been described as an example where a 050 telephone number is used, but it is also possible to make an outgoing call using a representative number as a call source number. In this case, IP telephone 18 puts the representative number at the call source number, and puts the internal number of IP telephone 18 at the transfer source number.
(3) In the case of telephone number pattern C on the outgoing call side
   Call destination: IP telephone 19 within SIP internal network 10
   When the internal number of IP telephone 19 is dialed, IP telephone 18 carries out call processing to internal network SIP server 30 and reports the internal number as the call source identification number. Internal network SIP server 30 then connects to IP telephone 19 via SIP internal network 10 and reports the internal number as the call source identification number (path (#1) of FIG.10).
   Call destination: IP telephone 46 of the same carrier A
   When the 050 telephone number of IP telephone 46 is dialed, IP telephone 18 carries out call processing to internal network SIP server 30 and reports the representative number as the call source identification number and the internal number of IP telephone 18 as the transfer source number. Internal network SIP server 30 carries out call processing to VoIP network 41 of carrier A from the call destination identification number, and reports the representative number as the call source identification number and the internal number as the transfer source number. Carrier SIP server 51 of carrier A then connects to IP telephone 19 via VoIP network 41 and reports the representative number as the call source identification number and the internal number as the transfer source number (path (#2) of FIG.10).

Here, SIP interconnection section 33 holds at least one of the IP telephone number and representative number assigned by the plurality of carriers A, B and C. A first route connecting from VoIP network 41 of carrier A to IP telephone 19 via VoIP network 42 of carrier B and a second route connecting from internal network SIP server 30 directly to IP telephone 19 via VoIP network 42 of carrier B are therefore assumed. A fee is therefore incurred for the first route between VoIP network 41 and VoIP network 42. In this case, when the 050 telephone number of the carrier VoIP network to which the call destination belongs is held in SIP interconnection section 33, it is preferable to directly connect to the carrier VoIP network to which the call destination belongs using this 050 telephone number by priority.
Call destination: IP telephone 22 of other carrier X
When the 050 telephone number of IP telephone 22 of carrier X is dialed, IP telephone 18 carries out call processing to internal network SIP server 30 and reports the representative number as the call source identification number and the internal number of IP telephone 18 as the transfer source number. The call destination number is a 050 telephone number for carrier X, and therefore internal network SIP server 30 carries out call processing to VoIP network 42 of carrier B, and reports the representative number as the call source identification number and the internal number of internal network SIP server 30 as the transfer source number. VoIP network 42 of carrier B then carries out call processing to VoIP network 23 of carrier X, and reports the representative number as the call source identification number and the internal number of VoIP network 42 as the transfer source number. VoIP network 23 of carrier X then connects to IP telephone 22 and reports the representative number as the call source identification number and the internal number of VoIP network 23 as the transfer source number (path (#3) of FIG.10). In this case, a fee is incurred at VoIP network 23 of carrier X.

SIP interconnection section 33 holds at least one of the 050 telephone number and the representative number assigned by the plurality of carriers A, B and C, but doesn't hold the 050 telephone number for connecting to VoIP network 23 of carrier X. In such a case, a connection is made to VoIP network 23 of carrier X via either carries A, B or C in which a virtual user agent is registered.
Call destination: Fixed line telephone 57 of PSTN network 54
When fixed line telephone 57 is dialed, IP telephone 18 carries out call processing to internal network SIP server 30 and reports the representative number as the call source identification number and the internal number of IP telephone 18 as the transfer source number. Since the call destination number is a telephone number for a PSTN network for carrier A, internal network SIP server 30 carries out call processing to VoIP network 41 of the same carrier A, and reports the representative number as the call source identification number and the internal number of internal network SIP server 30 as the transfer source number. VoIP network 41 of carrier A then connects to PSTN network 54, calls fixed line telephone 57 from PSTN network 54, and reports the representative number as the call source identification number and the internal number of VoIP network 41 as the transfer source number (path (#4) of FIG.10). In this case, a fee is incurred at PSTN 54.

Next, a case will be described where applications are supplied to SIP terminals within SIP internal network 10 or terminals of a carrier communication network. FIG.3 shows an example of a case of directly connecting to internal network SIP server 30 as an application server on SIP internal network 10, but a case is possible where connection is made via Internet network. In either case, connection of the application server is carried out via internal network SIP server 30.

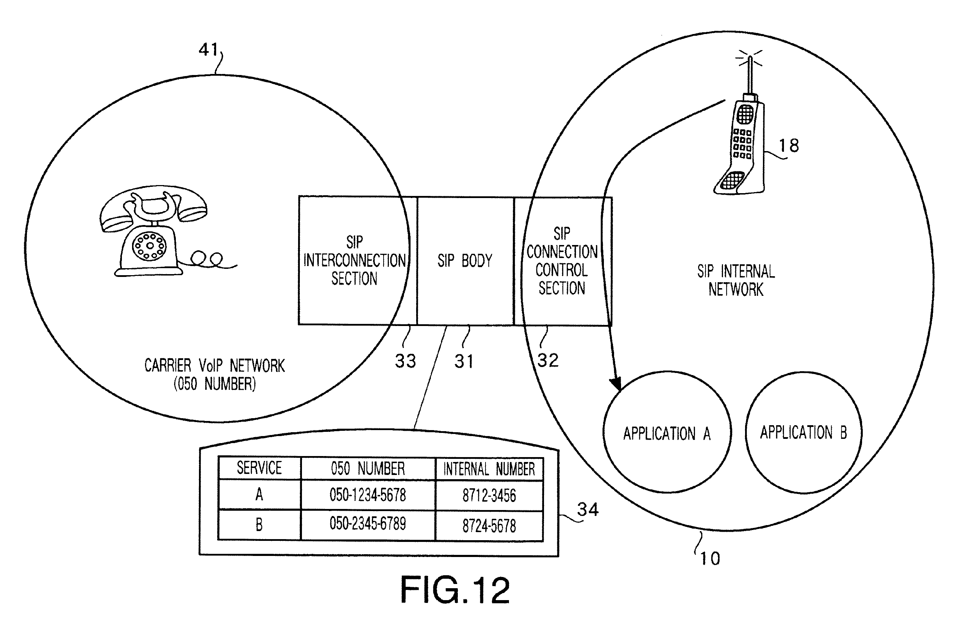

The case will be described referring to FIG.12 where provision of service A is received at a SIP terminal (for example, IP telephone 18) within SIP internal network 10. Here, the provider which manages SIP internal network 10 or people who are permitted by this provider supply several applications A and B within SIP internal network 10. In reality, an application server to which an internal number is assigned supplies services corresponding to applications. As shown in FIG.12, service names A and B of applications, internal numbers and 050 telephone numbers assigned to the services are correlated in database 34 of internal line SIP server 30. Database 34 also manages IP addresses assigned to SIP terminals within SIP internal network 10.

When IP telephone 18 within SIP internal network 10 accesses application A, the internal number (8712-3456) of application A is dialed from IP telephone 18. Internal network SIP server 30 then receives from IP telephone 18 an INVITE request where internal numbers of IP telephone 18 is set as the call source and the internal number of application A (8712-3456) is set as the call destination.

When the INVITE request is received, SIP body 31 of internal network SIP server 30 refers to the database and acquires the IP address of application A. The acquired IP address is then set as the header of the IP packet where the INVITE request is included in the transmission data, and transmitted onto the Internet network.

Upon receiving the INVITE request, application A (the application server) establishes a session with IP telephone 18 of the call source by signaling via internal network SIP server 30. As a result, IP telephone 18 can receive a service directly provided from application A via the Internet network.

Here, a service using voice will be described below as an example of the application service, but the present invention is by no means limited to voice services.

Application A provides a service for checking a voice quality of an IP telephone. Application A analyzes voice packets received from IP telephone 18 and checks the voice quality. The result of analysis is reported to IP telephone 18 using voice. As an example of one-way service that is provided by an application server to the terminals which request the service, information search services, karaoke scoring services, music distribution services, and other services are possible. As an information search service, a service is possible where information is searched in combination with speech recognition, and an application executes a search based on a speech keyword inputted from a terminal connected to (logged in to) the application, and the results of the search are returned to the terminal as voice or data. As a karaoke scoring service, an application gives a score to the singing voice of a user inputted from a terminal connected to (logged in to) the application, and the resulting score is returned to the terminal as voice or data. As a music distribution service, when a music desired for distribution such as BGM, BGV and music (including just melodies) is inputted from a terminal connected to (logged in to) the application, application extracts the relevant data from a database and returns the data. As a service for distributing a music, it is also preferable, for example, to make a BGM providing service and a music (including just melodies) distribution service coordinate with each other and make it possible for a user to download BGM to preview the BGM, and then download the music of the BGM. Other services for providing each type of information to terminals using voice may also be given.

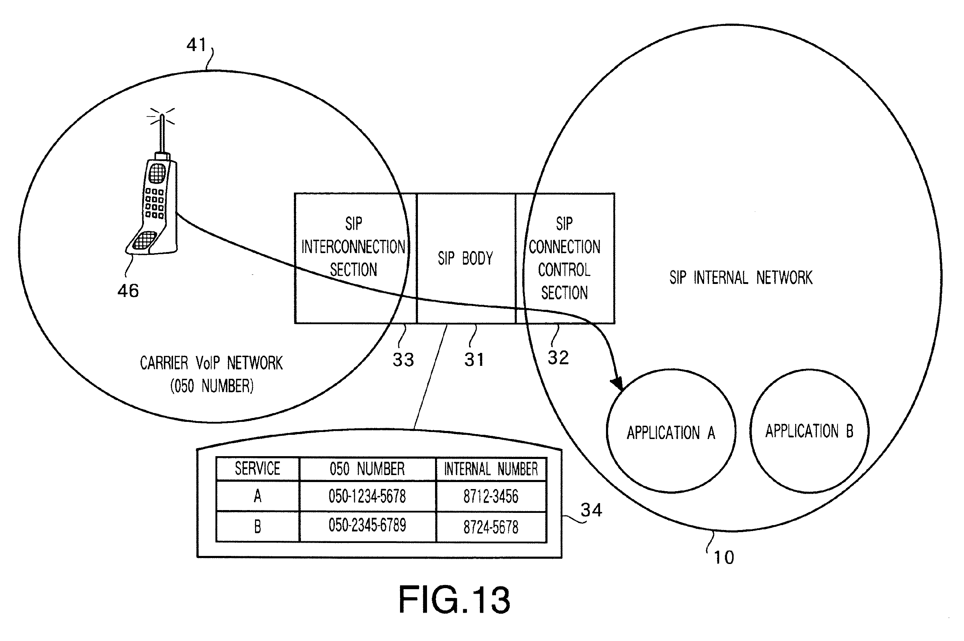

Further, it is also possible to receive services provided by applications A and B from outside of SIP internal network 10. FIG.13 is a conceptual diagram for the case of receiving a service provided by application A from IP telephone 46 (carrier A) outside of SIP internal network 10.

When IP telephone 46 outside of SIP internal network 10 accesses application A, the IP telephone number (050-1234-5678) of application A is dialed from IP telephone 46. An incoming call arrives at internal network SIP server 30 holding the IP telephone number (050-1234-5678) via carrier SIP server 51 of carrier A.

When the incoming call arrives from an external line to SIP interconnection section 33, SIP body 31 of internal network SIP server 30 refers to database 34 and acquires the internal number of application A which is the call destination. At this time, an IP address of application A (application server) is also acquired, and an INVITE request with the call destination telephone number rewritten to the internal number is transmitted to application A. The INVITE request is transmitted by setting the IP address of application A to the destination address of the IP packet containing the transmission data and transmitting the IP packet onto the Internet network.

Upon receiving the INVITE request, application A (the application server) establishes a session with IP telephone 46 of the call source by signaling via internal network SIP server 30 and VoIP network 41 of carrier A. After establishment of the session, IP telephone 46 carries out RTP voice connection for the IP address of application A and thereby can receive voice services directly via the internet network from application A.

Next, a case of utilizing application A during a call with an IP telephone within SIP internal network 10 from a carrier communication network will be described.

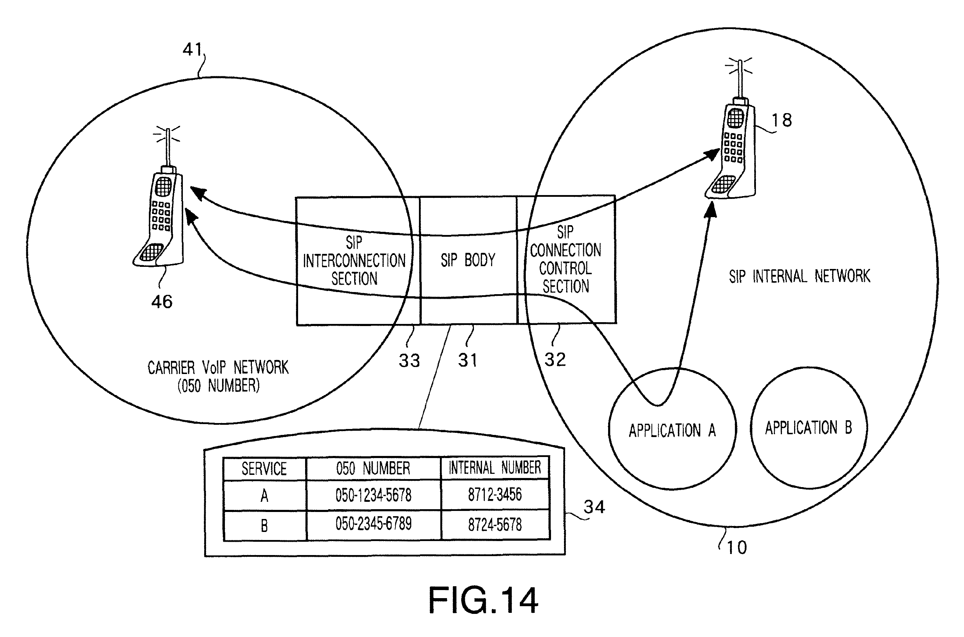

FIG.14 shows a procedure up to connecting from IP telephone 46 of VoIP network 41 to application A during a call with IP telephone 18 within SIP internal network 10. FIG.14 shows a state where a call is already made between IP telephone 46 of VoIP network 41 and IP telephone 18 of SIP internal network 10. In this situation, the user of IP telephone 46 dials the IP telephone number (050-1234-5678) of application A. When IP telephone 46 is dialed during a call, IP telephone 46 executes call processing to the IP telephone number (050-1234-5678) dialed for carrier SIP server 51. As a result of this call processing, IP telephone 46 transmits an INVITE request where the IP telephone number (050-1234-5678) of application A is set as the call destination to carrier SIP server 51.

Carrier SIP server 51 then looks at the call destination of the INVITE request received from IP telephone 46, and transmits an INVITE request to internal network SIP server 30 holding the IP telephone number.

Internal network SIP server 30 then looks at the call destination of the received INVITE request, and connects IP telephone 18 and IP telephone 46 during a call to application A. Specifically, internal network SIP server 30 instructs both IP telephone 18 and IP telephone 46 to reconnect to application A. A reconnection instruction is transmitted from SIP connection control section 32 to IP telephone 18 within SIP internal network 10, and a reconnection instruction is transmitted from SIP interconnection section 33 to IP telephone 46 of carrier VoIP network 41. At this time, SIP body 31 acquires the IP address of application A from database 34 to be included in the reconnection instruction.

IP telephone 18 and IP telephone 46 receiving the reconnection instructions carry out RTP voice connection to the IP address of application A and receive voice services. For example, it is assumed that application A provides a real time translation service. In this case, application A establishes a session with IP telephone 18 and IP telephone 46, applicationAtransmits translated voice which is the voice received from IP telephone 18 and translated, to IP telephone 46, and transmits the translated voice which is the voice received from IP telephone 46 and translated, to IP telephone 18.
Alternatively, it is also possible to perform control so as to provide translation services in just one direction. In this case, as viewed from IP telephone 46 issuing a request to connect to application A, translation services may be provided only to IP telephone 18 which is a terminal on the communicating party side or only to IP telephone 46 on the own side. Designation of terminals for receiving services is carried out from the side of the terminal issuing the connection request. For example, after inputting a telephone number of an application from a terminal, the data for designating the terminal for receiving the service is inputted by dialing. Further, a weather forecast providing service may be given as an example of providing voice services to both terminals connected via internal network SIP server 30. Either one of the terminals or both terminals connect to an application server for a weather forecast service (dial a telephone number of the weather forecast service during a call state), and receive voice services of the weather forecast. Moreover, maintenance services may be given as an example of providing services to SIP terminals of SIP internal network 10. SIP terminals of SIP internal network 10 connect to an application server providing maintenance services via internal network SIP server 30, and receive services such as download of the latest data and version checks. It is also possible to dial the telephone number of the maintenance services during a call with another terminal connected via internal network SIP server 30 and receive maintenance services from the application server.

Next, a configuration example of conversation support system using IP video telephones will be described. First, the conversation support system for the case of ordering products using the telephone will be described.

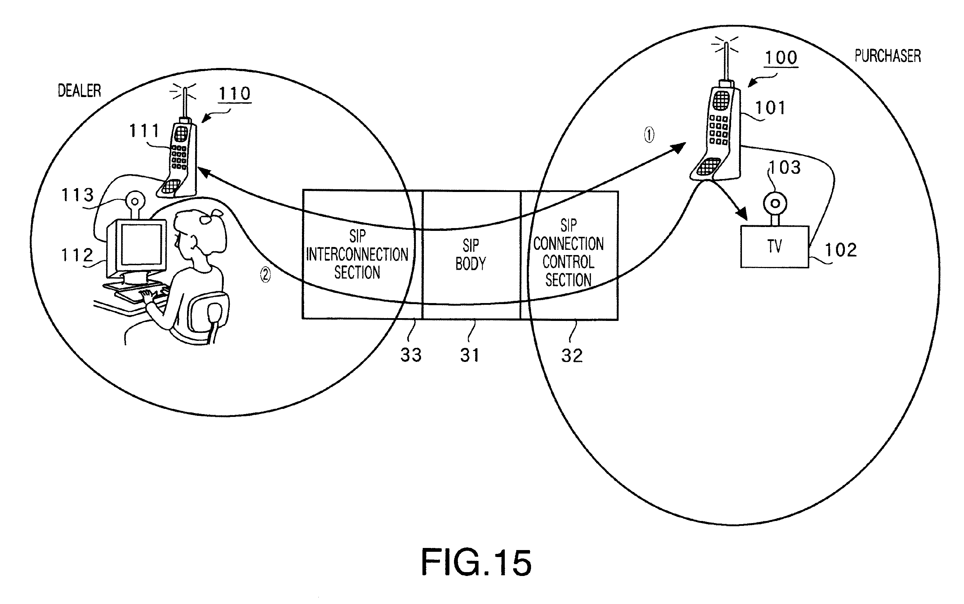

FIG.15 is a conceptual diagram for carrying out support for ordering the product. As shown in the same drawing, IP video telephones 100 and 110 are installed for both a purchaser and a dealer. IP video telephone 100 is configured with IP telephone body 101, television monitor 102 for displaying images, and camera 103 for taking images. IP video telephone 110 is configured with IP telephone body 111, personal computer 112 loaded with an order support system displaying/switching product description screens for supporting orders, and camera 113 for taking images. It is assumed that IP video telephone 100 is within SIP internal network 10 and IP video telephone 110 is IP terminal 47 which is on VoIP network 41 of carrier A.

The purchaser dials the 050 telephone number of IP video telephone 110 from IP video telephone 100. IP video telephone 100 carries out call processing to internal network SIP server 30. Internal network SIP server 30 subjected to this processing carries out call processing to the 050 telephone number of IP video telephone 110 from the 050 telephone number assigned by carrier A to VoIP network 41 of carrier A. Carrier SIP server 51 of carrier A then receives a call for IP video telephone 110 and connects to IP vide telephone 110.

When the operator of the dealer identified that IP telephone 110 receives an incoming call and IP telephone 100 of the call source is an IP video telephone, the operator makes an image communication function active. As a result, it is possible to start image communication between IP video telephone 100 and IP video telephone 110 using SIP control. The image signal is directly transmitted and received between terminals in the same way as the voice signal.

When image communication starts, an image of the operator taking the order is captured by camera 113, and is transmitted from IP video telephone 110 to IP video telephone 100. IP vide telephone 100 then outputs an image signal to television monitor 102 and displays the transmitted image of the operator.

The operator of the dealer then reports the screen for supporting order to the order support system according to the conversation of the order by operating personal computer 112. The order support system then transmits a product description screen selected according to the operation of the operator to IP video telephone body 111. The image supplied from the order support system and the image supplied from camera 113 can be switched automatically or as a result of operation. The product description screen transmitted to IP video telephone body 111 is directly transmitted to IP video telephone 100 in the same way as voice signals, and are displayed at television monitor 102. For example, when the purchaser orders product a during a conversation, the operator can select the image of product a using the order support system and can display this image at television monitor 102 of the purchaser. As a result, the purchaser can confirm the ordered product using television monitor 102 in person, so that it is possible to prevent mistakes or erroneous orders due to similar product names or tags and realize precise and accurate orders.

Further, it is also possible to locate a specialist as the operator of the dealer so as to transmit images of products and introduction video to IP video telephone 100 and display them at television monitor 102 at the same time while consulting by voice, so that it is possible to achieve order support that reliably reflects the requirements of the user.

Further, by combining a conversation support system using the above described IP video telephone and an application providing a sign language interpretation service, it is possible to realize conversation support for people with hearing difficulties. For example, an IP video telephone on the side of a person with hearing difficulties and an IP video telephone of the communicating party are connected, and the 050 telephone number of the application providing the sign language interpretation service is dialed from one of the IP video telephones. As a result, both of the IP telephones are reconnected to this application. Up to this point, this is the same as the example of the application described above. After connection to the application, a sign language image is captured from the camera on the side of the person with hearing difficulties and is transmitted to the application, and a voice signal that is voice-interpreted is transmitted from the application to the IP video telephone of the communicating party. On the other hand, voice of a talker inputted to the IP video telephone of the communicating party is transmitted to the application, and the application translates this to a sign language image and transmits the image to the IP video telephone of the person with hearing difficulties. The sign language image is then displayed at the television monitor connected to the IP video telephone of the person with hearing difficulties. In this way, it is possible to utilize a sign language interpretation services at the same time. In the above example, sign language interpretation services are provided to both terminals, but it is also possible to provide sign language interpretation services to just one of the terminals. For example, the 050 telephone number of the application providing sign language interpretation services is dialed from one of the terminals, and data designating terminals for providing sign language interpretation services is inputted by dialing. As a result, both terminals connect to the application, and sign language interpretation services are provided only to designated terminals.

The present application is based on Japanese Patent Application No.2004-293125, filed on October 5, 2004, entire content of which is expressly incorporated by reference herein.

### Industrial Applicability

The present invention is capable of connecting to a carrier communication network within an independent communication network without preparing a customer information database and IP call control apparatus corresponding to the system specifications of communication providers and can be applied to an internal network SIP server for controlling connection of SIP terminals of SIP internal network.

## Claims

1. A SIP server that controls connection between SIP terminals within an independent SIP network constructed on the Internet, comprising:
a SIP interconnection section that holds an identification number for carrier or a representative number assigned by a carrier to a user agent which is registered to the carrier in place of the SIP terminal, and receives an incoming call from a carrier communication network or makes an outgoing call to the carrier communication network using the identification number for carrier or the representative number;
a database that manages connection control data containing the identification number for carrier and an independent network identification number of each SIP terminal within the independent SIP network; and
a connection control section that when there is an incoming call from an external line to the identification number for carrier or the representative number held in the SIP interconnection section connects to the relevant SIP terminal within the independent SIP network referring to the database, and when there is an outgoing call to an external line to the carrier communication network from the SIP terminal within the independent SIP network connects to the relevant carrier communication network using the identification number for carrier or the representative number assigned by the carrier referring to the database.

2. The SIP server according to claim 1, wherein, when there is an incoming call from an external line to the identification number for carrier held in the SIP interconnection section, the connection control section changes the relevant identification number for carrier to the independent network identification number referring to the database, and connects to the SIP terminal based on the changed independent network identification number.

3. The SIP server according to claim 1, wherein, when there is an incoming call from an external line to the representative number held in the SIP interconnection section, the connection control section requests input of the independent network identification number to a call source, and connects to the SIP terminal based on the independent network identification number inputted according to the request.

4. The SIP server according to claim 1, wherein, when there is an outgoing call to an external line from the SIP terminal within the independent SIP network to the carrier communication network, the connection control section changes the independent network identification number of the SIP terminal to the identification number for carrier referring to the database, and connects to the carrier communication network using the changed identification number for carrier.

5. The SIP server according to claim 1, wherein, when there is an outgoing call to an external line from the SIP terminal within the independent SIP network to the carrier communication network, the connection control section changes the independent network identification number of the SIP terminal to the representative number referring to the database, and connects to the carrier communication network using the changed representative number.

6. The SIP server according to claim 4, wherein:
the SIP interconnection section holds at least one of the identification number for carrier and the representative number assigned by a plurality of carriers; and
when the identification number for carrier or the representative number of the carrier communication network to which a call destination belongs is not held in the SIP interconnection section, the connection control section connects to another carrier communication network using an identification number for carrier or a representative number of another carrier communication network held in the SIP interconnection section and connects to the carrier communication network to which the call destination belongs via another carrier communication network.

7. The SIP server according to claim 6, wherein, when the identification number for carrier or the representative number of the carrier communication network to which the call destination belongs is held in the SIP interconnection section, the connection control section connects to the carrier communication network to which the call destination belongs using the identification number for carrier or the representative number by priority.

8. The SIP server according to claim 1, wherein:
the database manages an identification number for carrier, or an representative number, and independent network identification number relating to an application server on the independent SIP network; and
when there is an incoming call from an external line to the identification number for carrier or the representative number of the application server, the connection control section refers to the database, connects a call source to the application server, and provides services from the application server to the call source.

9. The SIP server according to claim 8, wherein, when there is an incoming call from the independent SIP network to the independent network identification number of the application server, the connection control section refers to the database, connects the call source to the application server, and provides services from the application server to the call source.

10. The SIP server according to claim 8, wherein the connection control section receives requests to connect to a desired application server from both calling terminals during a call between the SIP terminals within the independent SIP network or between a terminal on a carrier side and the SIP terminal, and connects the terminals to the application server.

11. The SIP server according to claim 8, wherein the connection control section receives requests to connect to an application server from one of the calling terminals during a call between the SIP terminals within the independent SIP network or between a terminal on a carrier side and the SIP terminal, and connects the terminals to the application server.

12. The SIP server according to claim 10, wherein, upon receiving requests to connect to an application server from one of the calling terminals during a call between the SIP terminals within the independent SIP network or between the terminal on the carrier side and the SIP terminal, the connection control section connects the other calling terminal to the application server.

13. The SIP server according to claim 10, wherein, upon receiving requests to connect to an application server from one of the calling terminals during a call between the SIP terminals within the independent SIP network or between the terminal on the carrier side and the SIP terminal, the connection control section connects the calling terminal which is a source of the request to the application server.

14. The SIP server according to claim 10, wherein, upon receiving requests to connect to an application server from one of the calling terminals during a call between the SIP terminals within the independent SIP network or between the terminal on the carrier side and the SIP terminal, the connection control section connects the both calling terminals to the application server.

15. The SIP server according to claim 8, wherein the request to connect to the application server is carried out using the identification number for carrier, representative number, or independent network identification number of the application server managed in the database.
